# EUROPEAN PATENT APPLICATION

(11) **EP 2 484 506 A1**
(43) Date of publication of application: **08.08.2012**
(21) Application number: 10820435.5
(22) Date of filing: 24.09.2010
(51) Int. Cl.: B29B 17/00, B03B 5/36, B03B 9/06, B03C 7/02, B03C 7/06, B29B 17/04

(54) **METHOD AND FACILITY FOR SORTING AND SEPARATING WASTE PLASTIC**

(30) Priority: 02.10.2009 JP 2009230053
(71) Applicant: Hitachi Zosen Corporation, Osaka-shi, Osaka 559-8559 (JP); Kyowa Sangyo Co., Ltd., Kounosu-shi, Saitama 365-0061 (JP)
(72) Inventor: ANDO, Kazuo, Saitama 365-0061 (JP); INOUE, Tetsuya, Osaka 559-8559 (JP); NIWA, Tsutomu, Osaka 559-8559 (JP); ITOGA, Takeshi, Osaka 559-8559 (JP)
(74) Representative: le Vrang, Klaus
(86) International application number: PCT/JP2010/066481
(87) International publication number: WO 2011/040317

(57) **Abstract**

A facility for sorting and separating waste plastic includes: a crusher (11) for crushing waste plastic material into waste plastic fragments; a steam-cleaning device (13) for cleaning the waste plastic fragments; a primary wet specific-gravity sorter (14) and a secondary wet specific-gravity sorter (15) for separating the waste plastic fragments into floating or sinking specific-gravity-sorted fragments with a separating liquid having specific gravity which is the median of specific gravity of materials contained in the waste plastic fragments until the specific-gravity-sorted fragments contain three or less materials; and first to third electrostatic separation devices (16A to 16C) including frictional electrification devices for frictionally electrifying the specific-gravity-sorted fragments and electrostatic sorting devices for putting the frictionally electrified specific-gravity-sorted fragments into a static electric field and altering the falling directions of the specific-gravity-sorted fragments to be separated according to the type of material.

## Description

### Technical Field

The present invention relates to methods and facilities for sorting and separating waste plastic, in which waste plastic feedstock containing multiple materials from waste household appliances and scrap cars is sorted out according to the type of material.

### Background Art

In recent years, waste plastic has been frequently collected and recycled in accordance with the Home Appliance Recycling Law in Japan. Waste plastic has to be accurately sorted and collected according to the type of material by categories such as waste household appliances and scrap cars for recycling.

The inventors have developed electrostatic separation, focusing on the fact that, as described in, for example, Patent Literature 1, plastic fragments are frictionally electrified and put into a static electric field formed between a positive opposite electrode and a negative drum electrode, and thus the plastic fragments fall in different directions using the electrostatic power of materials attracted or repelled by the electrodes due to differences in polarity and electrification amount between the materials.

However, waste plastic feedstock of waste household appliances and scrap cars contains multiple materials, and crushed waste plastic fragments contain multiple materials and have contaminated surfaces. Thus, the improvement in the separating accuracy of the plastic fragments requires higher degrees of cleaning and sorting.

### Citation List

### Patent Literature

Patent Literature 1: Japanese Patent Application Laid-Open Publication No. 2000-308837

### Summary of Invention

### Technical Problem

However, when waste plastic containing multiple materials is sorted and separated, the electrostatic separation of Patent Literature 1 requires electrostatic sorting devices each including an opposite electrode and a drum electrode disposed in multiple stages. In this case, waste plastic fragments containing multiple materials are separated by the electrostatic sorting device on the most upstream stage side. If the separating accuracy is low in the electrostatic sorting device on the most upstream stage side, it becomes difficult to increase the separating accuracy in the electrostatic sorting devices on the downstream stage side. Thus, it may become difficult to simultaneously and accurately sort and separate waste plastic fragments containing multiple materials according to the type of material with the electrostatic separation.

The present invention has been devised to solve the problem. An object of the present invention is to provide a method and facility for sorting and separating waste plastic which can sort and separate waste plastic containing multiple materials according to the type of material with high accuracy.

### Solution to Problem

In order to solve the problem, a method for sorting and separating waste plastic according to a first aspect, when sorting and separating waste plastic containing multiple materials according to the type of material, includes the steps of: crushing waste plastic feedstock into waste plastic fragments each having a predetermined size; putting the cleaned waste plastic fragments into a separating liquid having specific gravity which is the median of specific gravity of the materials contained in the waste plastic fragments, and repeating wet specific gravity sorting to separate the waste plastic fragments into floating light specific-gravity-sorted fragments and sinking heavy specific-gravity-sorted fragments until the light specific-gravity-sorted fragments and the heavy specific-gravity-sorted fragments each contain three or less materials; and putting the frictionally electrified specific-gravity-sorted fragments containing two or three materials into an static electric field formed between a rotary drum electrode and an opposite electrode which are applied with high voltage, and altering the falling directions of the specific-gravity-sorted fragments by using electrostatic power generated by polarity and electrification amount of the materials to perform electrostatic separation for separating the specific-gravity-sorted fragments according to the type of material.

A facility for sorting and separating waste plastic containing multiple materials according to the type of material according to a second aspect, includes: a crusher for crushing waste plastic feedstock into waste plastic fragments each having a predetermined size; a cleaning device disposed downstream of the crusher for cleaning the waste plastic fragments; at least one wet specific-gravity sorter disposed downstream of the cleaning device for separating the waste plastic fragments into floating light specific-gravity-sorted fragments and sinking heavy specific-gravity-sorted fragments with a separating liquid having specific gravity which is the median of specific gravity of the materials contained in the waste plastic fragments until the light specific-gravity-sorted fragments and the heavy specific-gravity-sorted fragments each contain three or less materials; and an electrostatic separation device which is disposed downstream of the wet specific-gravity sorter and includes an electrostatic sorting device for separating the light specific-gravity-sorted fragments and the heavy specific-gravity-sorted fragments according to the type of material, wherein the electrostatic sorting device includes a frictional electrification device for frictionally electrifying the specific-gravity-sorted fragments, and a rotary drum electrode and an opposite electrode which are applied with high voltage and form a static electric field, the specific-gravity-sorted fragments frictionally electrified by the frictional electrification device are put into the static electric field, and electrostatic power generated by polarity and electrification amount of the materials of the specific-gravity-sorted fragments is used to alter the falling directions of the specific-gravity-sorted fragments.

The facility for sorting and separating waste plastic according to a third aspect has the configuration of the second aspect wherein the cleaning device includes a steam-cleaning device for spraying steam to the waste plastic fragments to remove contaminants from the surfaces of the waste plastic fragments.

The facility for sorting and separating waste plastic according to a fourth aspect has the configurations of the second and third aspects, wherein the wet specific-gravity sorter includes: a separation tank which contains a separating liquid and has a heavy specific-gravity fragment collecting portion formed on the bottom of the separation tank for collecting the sinking heavy specific-gravity-sorted fragments; a material supplier having a supply port opened so as to face the heavy specific-gravity fragment collecting portion in the vicinity of the bottom of the separation tank; a heavy specific-gravity fragment discharger having an inlet opened so as to face the heavy specific-gravity fragment collecting portion in the cleaning tank for discharging the heavy specific-gravity-sorted fragments; and a light specific-gravity fragment discharger having an inlet opened so as to face the surface of the separating liquid in the cleaning tank for discharging the light specific-gravity-sorted fragments, and the material supplier has a rotary axis with a plurality of protruding pieces rotatably disposed at the axial center position of the supply cylinder, the protruding pieces being capable of stirring the specific-gravity-sorted fragments at a high speed and supplying the specific-gravity-sorted fragments from the supply port.

### Advantageous Effects of Invention

According to the invention of the first aspect, wet specific-gravity sorting is repeated at least once to separate waste plastic fragments containing multiple materials into specific-gravity-sorted fragments containing two or three materials, and the specific-gravity-sorted fragments are electrostatically separated according to the type of material. Thus, waste plastic fragments containing multiple materials can be sorted and separated with high accuracy, and waste plastic can be recycled with high efficiency.

According to the invention of the second aspect, wet specific-gravity sorting is repeated multiple times by at least one wet specific-gravity sorter to separate waste plastic fragments containing multiple materials to specific-gravity-sorted fragments containing three or less materials, the specific-gravity-sorted fragments containing three or less materials are frictionally electrified by the frictional electrification device and are put into the static electric field of the electrostatic sorting device, and the electrostatic power of the materials attracted or repelled by the electrodes is used to alter the falling paths of the specific-gravity-sorted fragments due to differences in polarity and electrification amount between the materials, so that the specific-gravity-sorted fragments can be separated according to the type of material. Thus, waste plastic fragments containing multiple materials can be accurately sorted and separated according to the type of material.

According to the invention of the third aspect, before sorting, steam is sprayed to waste plastic fragments by the steam-cleaning device to reliably remove contaminants such as oils and mold release agents adhering to the surfaces of the waste plastic fragments, so that the separating accuracy in wet specific-gravity sorting and electrostatic separation can be increased.

According to the invention of the fourth aspect, in the wet specific-gravity sorter, the supply port of the supply cylinder is opened so as to face the heavy specific-gravity fragment collecting portion in the vicinity of the bottom of the separation tank, so that the retention time and floating time of the specific-gravity-sorted fragments in the separating liquid can be extended and the separating accuracy with the separating liquid can be increased.

### Brief Description of Drawings

[FIG. 1] FIG. 1 is a block diagram of a facility for sorting and separating waste plastic according to a first embodiment of the present invention.
[FIG. 2] FIG. 2 is a flowchart illustrating a method for sorting and separating waste plastic.
[FIG. 3] FIG. 3 is a longitudinal sectional view of a primary wet specific-gravity sorter.
[FIG. 4A] FIG. 4A is a cross-sectional view of a supply cylinder of a material supplier in the primary wet specific-gravity sorter.
[FIG. 4B] FIG. 4B is a partial longitudinal sectional view of the supply cylinder of the material supplier in the primary wet specific-gravity sorter.
[FIG. 5A] FIG. 5A is an overall longitudinal sectional view of a first electrostatic separation device for separating two types of specific-gravity-sorted fragments according to the type of material.
[FIG. 5B] FIG. 5B is a partial cross-sectional view of the first electrostatic separation device for separating three types of specific-gravity-sorted fragments according to the type of material.
[FIG. 6A] FIG. 6A is a longitudinal sectional view of the second example of a sorting atmosphere adjuster in the first electrostatic separation device.
[FIG. 6B] FIG. 6B is a longitudinal sectional view of the third example of the sorting atmosphere adjuster in the first electrostatic separation device.
[FIG. 6C] FIG. 6C is a longitudinal sectional view of an electrode heater for heating an opposite electrode which is the fourth example of the sorting atmosphere adjuster in the first electrostatic separation device.

### Description of Embodiments

### First Embodiment

Referring to the accompanying drawings, the following will describe a first embodiment of a facility for sorting and separating waste plastic in accordance with the present invention.

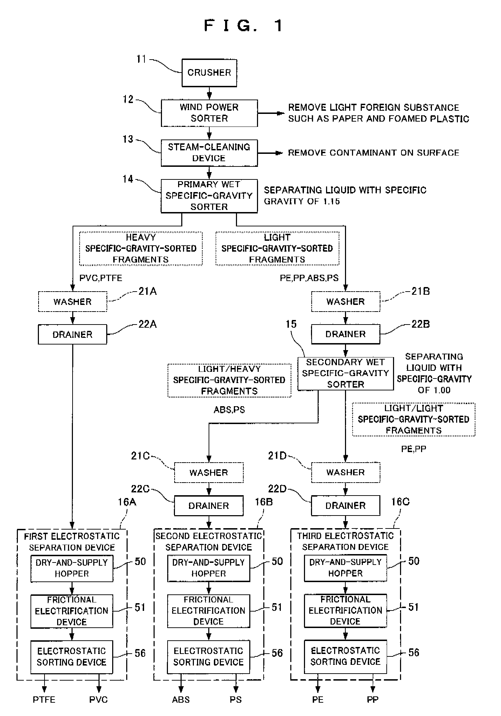

The facility for sorting and separating waste plastic separates waste plastic feedstock such as waste household appliances and scrap cars containing multiple types, for example, six types of materials according to the type of material. As shown in FIG. 1, the facility for sorting and separating waste plastic includes a crusher 11, a wind power sorter 12, a steam-cleaning device 13 (a cleaning device), a primary wet specific-gravity sorter 14 (a wet specific-gravity sorter), a secondary wet specific-gravity sorter 15 (a wet specific-gravity sorter), washers 21A to 21D, drainers 22A to 22D, and first to third electrostatic separation devices 16A to 16C. Further, the first to third electrostatic separation devices 16A to 16C each include a dry-and-supply hopper 50 (a heated-air dryer), a frictional electrification device 51, and an electrostatic sorting device 56.

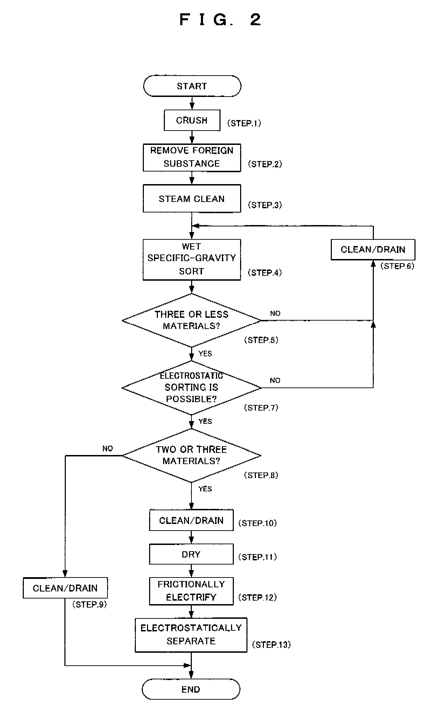

First, a method for sorting and separating waste plastic will be described referring to FIG. 2.

1) The crusher 11 crushes waste plastic feedstock into fragments of predetermined separable sizes (STEP 1).

2) The wind power sorter 12 removes light foreign substances from the waste plastic fragments (STEP 2).

3) The steam-cleaning device 13 sprays steam onto the waste plastic fragments to remove impurities such as oils and fats on the surfaces thereof (STEP 3).

The primary wet specific-gravity sorter 14 puts the waste plastic fragments in a separating liquid 30A (saline water) having predetermined specific gravity which is the median of specific gravity of all materials in the waste plastic fragments, for example, specific gravity of 1.15, and separates the waste plastic fragments into sinking heavy specific-gravity-sorted fragments and floating light specific-gravity-sorted fragments (STEP 4).

5) In the case where the number of materials included in the heavy specific-gravity-sorted fragments or the light specific-gravity-sorted fragments is four or more (STEP 5), cleaning and draining or draining alone is performed depending on the properties of the separating liquid 30A (STEP 6). Further, wet specific-gravity sorting is performed again by the secondary wet specific-gravity sorter 15 using a different separating liquid 30B. The separating liquid 30B has specific gravity which is the median of the specific gravity of the materials (STEP 4).

6) In the case where the number of materials included in the heavy specific-gravity-sorted fragments or the light specific-gravity-sorted fragments is three or less (STEP 5), it is determined whether or not the three materials can be electrostatically separated (STEP 7). In other words, electrostatic separation cannot be performed accurately when the three materials are close to each other in the triboelectric series. Therefore, following the cleaning and draining or the draining (STEP 6), wet specific-gravity sorting is performed again by the secondary wet specific-gravity sorter 15 (STEP 4). In contrast, when the three materials are away from each other in the triboelectric series, electrostatic separation can be performed accurately.

7) In the case where the number of materials included in the heavy specific-gravity-sorted fragments or the light specific-gravity-sorted fragments is one (STEP 9), cleaning and draining or draining alone is performed depending on the properties of the separating liquids 30A and 30B (STEP 6).

8) In the case where the heavy specific-gravity-sorted fragments or the light specific-gravity-sorted fragments include two or three materials which can be electrostatically separated (STEP 8), the specific-gravity-sorted fragments are sent to the first to third electrostatic separation devices 16A to 16C, respectively, after being cleaned and drained or only drained depending on the properties of separating liquids 30 A and 30B as necessary (STEP 10).

9) In the first to third electrostatic separation devices 16A to 16C, the specific-gravity-sorted fragments are dried in the dry-and-supply hopper 50 (STEP 11), are then frictionally electrified after being sent to the frictional electrification device 51 (STEP 12), and are sorted according to the type of material by the electrostatic sorting device 56 (STEP 13).

The following will describe details of the embodiment.

Herein, six types of materials contained in waste plastic fragments from home electric appliances or auto parts and others are, for example, polytetrafluoroethylene known under the trade name of Teflon® (PTFE), polyvinyl chloride (PVC), polypropylene (PP), polyethylene (PE), acrylonitrile-butadiene-styrene resin (ABS), and polystyrene (PS). Table 1 shows the specific gravity of the materials in order, and Table 2 shows the triboelectric series.

**[Table 1]**

| Material | PTFE | PVC | PS | ABS | PE | PP |
|---|---|---|---|---|---|---|
| Specific gravity | 2.14∼2.20 | 1.40 | 1.05∼1.07 | 1.04∼1.07 | 0.93∼0.94 | 0.90 |

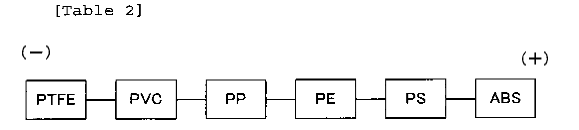

In the crusher 11, waste plastic feedstock having six types of materials collected from household appliances or auto parts and others is crushed into waste plastic fragments with outer diameters of, for example, 8 mm to 15 mm.

In the wind power sorter 12, air for separation is blown over the crushed waste plastic fragments at a predetermined speed to remove light foreign particles such as pieces of paper and foamed plastic fragments mixed in the fragments.

In the steam-cleaning device 13, the waste plastic fragments are put in a cleaning container through a charge chute, and are cleaned with steam for cleaning which is introduced into the container from the bottom thereof. By this process, coatings such as wax, oils, and mold release agents, and impurities adhering to the surfaces of the waste plastic fragments are effectively removed, so that separating accuracy can be increased.

In the primary wet specific-gravity sorter 14, the separating liquid 30 having specific gravity which is the median of specific gravity of the six waste plastics, for example, saline water having specific gravity of 1.15 is used to separate the waste plastic fragments into floating light specific-gravity-sorted fragments and sinking heavy specific-gravity-sorted fragments.

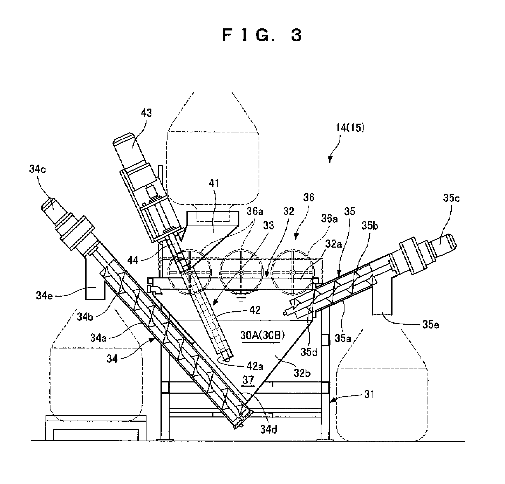

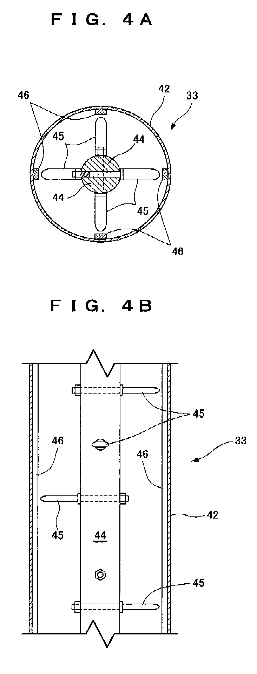

As shown in FIGS. 3, 4A, and 4B, the primary wet specific-gravity sorter 14 includes: a separation tank 32 disposed on a stand 31 to contain the separating liquid 30A; a material supplier 33 which supplies waste plastic fragments into the separating liquid 30A contained in the separation tank 32; a heavy specific-gravity fragment discharger 34 which discharges heavy specific-gravity-sorted fragments sunk in the deeper portion of the separating liquid 30A; a light specific-gravity fragment discharger 35 which discharges light specific-gravity-sorted fragments floating on the surface portion of the separating liquid 30A; and a plastic fragment guiding device 36 which feeds the light specific-gravity-sorted fragments floating on the surface portion of the separating liquid 30A into an inlet 35d of the light specific-gravity fragment discharger 35 by rotating a plurality of rotary blades 36a of the plastic fragment guiding device in a predetermined direction.

The separation tank 32 includes: a tank body 32a which is rectangularly or circularly shaped in a planar view; and a tapered tank 32b which has bottom plates inclined from the tank body 32a toward the center of the lower portion of the tapered tank. With the bottom plates, the cross section in a planar view of the tapered tank is reduced in size toward the lower portion of the tapered tank. A heavy specific-gravity fragment collecting portion 37 is provided on the lower end side of the tapered tank 32b to collect sinking heavy specific-gravity-sorted fragments.

The material supplier 33 includes a feeding hopper 41 disposed above the separation tank 32 and a supply cylinder 42 with a circular cross-section which is connected to the feeding hopper 41. The supply cylinder 42 is submerged into the separating liquid 30A from the surface thereof so as to extend toward the vicinity of the deeper portion of the separating liquid. A supply port 42a is opened on the lower end of the supply cylinder 42 so as to face the heavy specific-gravity fragment collecting portion 37. Thus, the material supplier 33 injects and releases waste plastic fragments into the deeper portion of the separating liquid 30A from the supply port 42a, so that the immersion time and movement distance of waste plastic fragments in the separating liquid 30A are increased. Hence, the accuracy of separating sinking and floating specific-gravity-sorted fragments in the separating liquid 30A can be increased.

Further, a driving motor 43 is provided on the upper end of the supply cylinder 42 to rotate a rotary axis 44 disposed at the axial center position of the supply cylinder 42 at a high speed. Blade pieces 45 for stirring and feeding are fitted to the rotary axis 44 in the axial direction at regular intervals equiangularly (90° in the drawing). Further, stirring ribs 46 are provided on the inner peripheral surface of the supply cylinder 42 at 90° intervals so as to protrude along the axial direction. Therefore, the blade pieces 45 rotated by the driving motor 43 via the rotary axis 44 and the stirring ribs 46 can effectively stir waste plastic fragments supplied from the feeding hopper 41 into the supply cylinder 42, remove contaminants on the surfaces of the waste plastic fragments, and feed the waste plastic fragments from the supply port 42a into the deeper portion of the separating liquid 30A at a predetermined feed speed.

The blade pieces 45 are fitted to the rotary axis 44 so as to be rotatable about the axial center orthogonal to the rotary axis 44, and the orientations of the blade pieces can be adjusted. The tilting angles of the blade pieces 45 relative to a feed direction can be adjusted to control the stirring condition and supply speed of waste plastic fragments.

The heavy specific-gravity fragment discharger 34 is a screw feeder including: a discharge cylinder 34a disposed in an up-to-down direction along the outer surface of the tapered tank 32b; a spiral screw 34b fitted inside the discharge cylinder 34a so as to be rotatable about the axial center; and a driving motor 34c disposed on the upper end of the discharge cylinder 34a to rotate the screw 34b. An inlet 34d is opened on the lower end of the discharge cylinder 34a so as to face the heavy specific-gravity fragment collecting portion 37, and a delivery port 34e is formed on the upper end side of the discharge cylinder 34a.

The light specific-gravity fragment discharger 35 is a screw feeder including: a discharge cylinder 35a passing from the outside through the inside of a side panel of the separation tank 32 from above downward; a spiral screw 35b fitted inside the discharge cylinder 35a so as to be rotatable about the axial center; and a driving motor 35c disposed on the upper end of the discharge cylinder 35a to rotate the screw 35b. Further, the inlet 35d is opened on the lower end of the discharge cylinder 35a toward the surface layer of the separating liquid 30A, and a delivery port 35e is formed on the upper end side of the discharge cylinder 35a.

Waste plastic fragments including six types of materials can be separated into heavy specific-gravity-sorted fragments including two types of materials (PTFE, PVC) and light specific-gravity-sorted fragments including four types of materials (PE, PP, ABS, PS) by the primary wet specific-gravity sorter 14.

The secondary wet specific-gravity sorter 15 separates light specific-gravity-sorted fragments including four types of materials (PE, PP, ABS, PS) into light/light specific-gravity-sorted fragments (PE, PP) and light/heavy specific-gravity-sorted fragments (ABS, PS) which respectively include two types of materials, and uses water with specific gravity of 1.0 which is the median of specific gravity of the four materials (PE, PP, ABS, PS) as the separating liquid 30B. The secondary wet specific-gravity sorter 15 has the same structure as the primary wet specific-gravity sorter 14 but is not required to have a heavy workload, so that the secondary wet specific-gravity sorter 15 can be smaller in size.

Incidentally, the secondary wet specific-gravity sorter 15 is disposed herein to sort out light specific-gravity-sorted fragments, however, the secondary wet specific-gravity sorter may be disposed to sort out heavy specific-gravity-sorted fragments when the number of materials of the heavy specific-gravity-sorted fragments is three or at least four. Further, the single secondary wet specific-gravity sorter 15 is disposed to sort out light specific-gravity-sorted fragments, however, another secondary wet specific-gravity sorter may be disposed downstream, when waste plastic fragments to be sorted out by the secondary wet specific-gravity sorter 15 include four or more types of materials or when even waste plastic fragments including three materials are hardly electrostatically separated since the three materials are close to each other in the triboelectric series.

Downstream of the primary wet specific-gravity sorter 14 and the secondary wet specific-gravity sorter 15, the washers 21A to 21D are provided to wash away the used separating liquids 30A and 30B with cleaning water in the case where the separating liquids 30A and 30B adversely affect the downstream sorting processes. The washers 21A to 21D are not used unless the separating liquid 30A adversely affects the downstream sorting processes. Further, downstream of the washers 21A to 21D, the drainers 22A to 22D such as centrifugal drainers are provided to drain cleaning liquid and the separating liquids 30A and 30B.

The first to third electrostatic separation devices 16A to 16C sort two types (or three types) of waste plastic fragments according to the type of material by electrostatic separation. The first electrostatic separation device 16A separates out two types of heavy specific-gravity-sorted fragments, i.e., PTFE and PVC discharged from the drainer 22A. The second electrostatic separation device 16B separates out two types of light/heavy specific-gravity-sorted fragments, i.e., ABS and PS discharged from the drainer 22C. The third electrostatic separation device 16C separates out two types of light/light specific-gravity-sorted fragments, i.e., PE and PP discharged from the drainer 22D.

The electrostatic separation is a method for sorting plastic fragments through the following steps of: applying static electricity to plastic fragments; putting the plastic fragments into the static electric field generated between two electrodes; and using the electrostatic power of materials attracted or repelled by the electrodes to alter the falling trajectories of the plastic fragments due to differences in polarity and electrification amount between the materials. Since the first to third electrostatic separation devices 16A to 16C sort and separate out two types of waste plastic fragments and have the same structure, a description will be made only of the first electrostatic separation device 16A and descriptions of the second and third electrostatic separation devices 16B and 16C are omitted. As a matter of course, heavy specific-gravity-sorted fragments, light/heavy specific-gravity-sorted fragments, and light/light specific-gravity-sorted fragments may be separated out severally by using any one of the electrostatic separation devices.

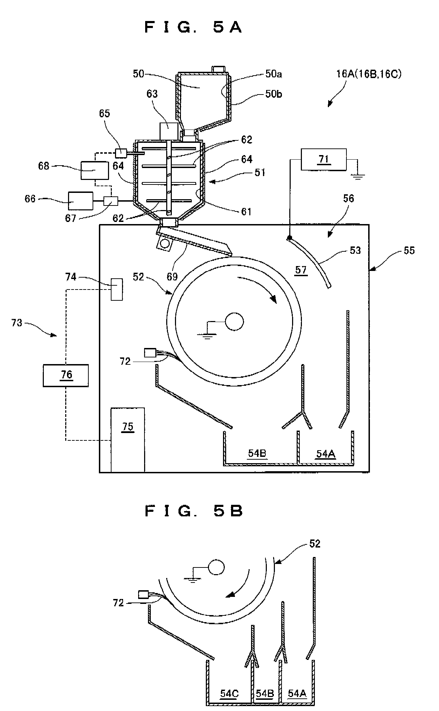

As shown in FIG. 5A, the first electrostatic separation device 16A includes: the dry-and-supply hopper 50 (heated-air dryer) which causes moisture adhering to heavy specific-gravity-sorted fragments to evaporate by heating the heavy specific-gravity-sorted fragments stored in a heating container 50a with a heater 50b; the frictional electrification device 51 which frictionally electrifies the dried heavy specific-gravity-sorted fragments; and the electrostatic sorting device 56 forming a static electric field 57 which serves as a separating space between a metal rotary drum electrode 52 and a metal opposite electrode 53. First and second sorting trays 54A and 54B are disposed below the static electric field 57 and the rotary drum electrode 52. Incidentally, the outlet of the frictional electrification device 51, the electrodes 52 and 53, and the first and second sorting trays 54A and 54B are covered by a shield box 55 to keep an atmosphere for sorting.

The two first and second sorting trays 54A and 54B are disposed along the rotating direction of the rotary drum electrode 52 to sort out two types of heavy specific-gravity-sorted fragments. As shown in FIG. 5B, however, first to third sorting trays 54A to 54C may be disposed along the rotating direction of the rotary drum electrode 52 to sort out three types of waste plastic fragments according to the type of material.

The frictional electrification device 51 includes: an electrification container 61 which contains and electrifies heavy specific-gravity-sorted fragments supplied from the dry-and-supply hopper 50; rotary stirring blades 62 which stir heavy specific-gravity-sorted fragments in the electrification container 61 to be electrified; and a rotary driving motor 63 which rotates the rotary stirring blades 62. On the outer periphery of the electrification container 61, provided is an electrifying heater 70 including: heaters 64 which are fed with electricity by a heating power supply 66 to heat specific-gravity-sorted fragments for the acceleration of electrification; a temperature sensor 65 which detects a temperature inside the electrification container 61; and an electrification temperature controller 68 which adjusts an electrification temperature by controlling the supply of electricity to the heaters 64 via a heating controller 67 based on the temperature detected by the temperature sensor 65. Incidentally, the inner surface of the electrification container 61 and the surfaces of the stirring blades 62 are insulted and coated with, for example, predetermined resin to prevent the emission of charge from heavy specific-gravity-sorted fragments.

Thus, heavy specific-gravity-sorted fragments put into the electrification container 61 are stirred by the rotary stirring blades 62, so that the two types of heavy specific-gravity-sorted fragments are rubbed against each other, and at the same time, against the inner surface of the electrification container 61 and the surfaces of the stirring blades 62. Thus, the two types of heavy specific-gravity-sorted fragments are charged with polarities and electrification amounts according to the triboelectric series of the resins. The temperature of the atmosphere for sorting in the electrification container 61 is controlled to, for example, 70° to 100° by the electrification temperature controller 68, so that heavy specific-gravity-sorted fragments can be effectively electrified in a shorter electrification time. This is because a longer electrification time is needed to charge heavy specific-gravity-sorted fragments with a sufficient amount of electricity for obtaining high separating accuracy when the electrification temperature in the electrification container 61 is below 70°, and the separating accuracy may be lowered since heavy specific-gravity-sorted fragments begin melting and softening and thus stick to each other when the electrification temperature is over 100°.

A quantitative feeder 69 including an oscillating feeder, a belt conveyer, and so forth is disposed above the rotary drum electrode 52 in the box 55 to quantitatively feed electrified heavy specific-gravity-sorted fragments discharged from the outlet of the electrification container 61 to the vicinity of the top of the rotary drum electrode 52.

The metal rotary drum electrode 52 is a grounded negative electrode which is rotated about the horizontal rotary axis in the direction of the arrow at a predetermined speed by a rotary driving device (not shown). The opposite electrode 53 is disposed so as to extend from above the top of the rotary drum electrode 52 toward the downstream side in the rotating direction and face the metal rotary drum electrode 52 with a predetermined distance therebetween. The opposite electrode 53 is arc-shaped concentrically with the rotary drum electrode 52 at a predetermined distance from the outer periphery of the rotary drum electrode 52. The opposite electrode 53 with a high voltage power supply 71 connected thereto forms a positive electrode, and the opposite electrode 53 and the rotary drum electrode 52 generate the static electric field 57 serving as the separating space therebetween.

The first and second sorting trays 54A and 54B are disposed below the rotary drum electrode 52, wherein the first sorting tray 54A selects and contains heavy specific-gravity-sorted fragments repelled by the rotary drum electrode 52 due to the homopolarity while attracted by the opposite electrode 53 due to the heteropolarity, and the second sorting tray 54B selects and contains heavy specific-gravity-sorted fragments attracted by the rotary drum electrode 52 due to the heteropolarity while repelled by the opposite electrode 53 due to the homopolarity. Reference numeral 72 denotes a scraping brush for scraping away the heavy specific-gravity-sorted fragments attracted to the rotary drum electrode 52.

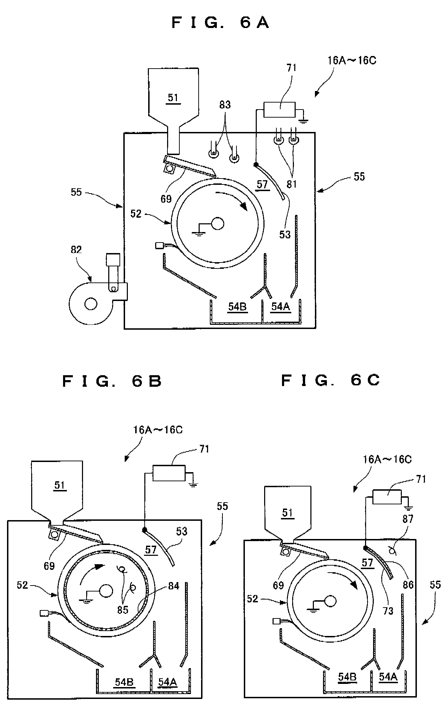

The following will describe sorting atmosphere adjusters which improve separating accuracy in the first to third electrostatic separation devices 16A to 16C referring to FIG. 5A and FIGS. 6A to 6C.

The first example of a sorting atmosphere adjuster shown in FIG. 5A is a humidity adjuster 73 which keeps the relative humidity of the atmosphere for sorting in the box 55 at 60% or lower. The humidity adjuster 73 includes: a humidity sensor 74 for detecting relative humidity in the box 55; a dehumidifier 75 for lowering the relative humidity in the box 55; and a humidity controller 76 for operating the dehumidifier 75 based on the detected values of the humidity sensor 74. The humidity controller 76 can provide excellent separating accuracy by keeping the relative humidity in the box 55 at 60% or lower through controlling the dehumidifier 75 based on the detected values of the humidity sensor 74.

The second example of the sorting atmosphere adjuster shown in FIG. 6A is a box heater which controls the temperature of the atmosphere for sorting in the box 55. In the box heater, for example, heating lamps 81 or infrared heaters, a heated air supply fan 82 for blowing hot air into the box 55, and at least one heating lamp 83 or infrared lamp to be disposed in the vicinity of an area where waste plastic fragments drop from the quantitative feeder 69 toward the rotary drum electrode 52 are selectively provided.

The third example of the sorting atmosphere adjuster shown in FIG. 6B includes: a sheathed heater 84 attached to the inner peripheral surface of the rotary drum electrode 52; and infrared heaters 85 as a radiating heat source disposed inside the rotary drum electrode 52. The sheathed heater 84 and the infrared heaters 85 as an electrode heater heat the rotary drum electrode 52 from the inside. Further, the fourth example of the sorting atmosphere adjuster shown in FIG. 6C includes: a sheathed heater 86 attached to the rear surface of the opposite electrode 53; and an infrared heater 87 as a radiating heat source disposed on the rear side. The sheathed heater 86 and the infrared heater 87 as an electrode heater heat the opposite electrode 53.

High sorting accuracy can be achieved by controlling the atmosphere for sorting in the box 55, the rotary drum electrode 52, and the opposite electrode 53 to high temperatures with the sorting atmosphere adjusters in the second to fourth examples. Further, even in a state where the relative humidity of the atmosphere for sorting is over 70% without using the humidity adjuster 73 of the second example, high separating accuracy can be achieved with the sorting atmosphere adjusters in the second to fourth examples.

The steps of sorting waste plastic in the facility for sorting and separating with the above configuration will be described.

A. Waste plastic feedstock is crushed by the crusher 11 so as to have a separable diameter of 8 mm to 15 mm. Light foreign substances are removed from the waste plastic fragments by the wind power sorter 12. Further, impurities adhering to the surfaces of the waste plastic fragments are removed by the steam-cleaning device 13.

B. In the primary wet specific-gravity sorter 14, the waste plastic fragments are separated into heavy specific-gravity-sorted fragments (PTFE, PVC) and light specific-gravity-sorted fragments containing four materials (PE, PP, ABS, PS) by putting the waste plastic fragments in the separating liquid 30A (saline water) having predetermined specific gravity of, for example, 1.15 which is the median of specific gravity of materials included in the waste plastic fragments.

C. In the secondary wet specific-gravity sorter 15, the light specific-gravity-sorted fragments including four or more materials are further separated into sinking light/heavy specific-gravity-sorted fragments (ABS, PS) and floating light/light specific-gravity waste plastic fragments (PE, PP), by selecting the separating liquid 30B (water) of, for example, 1.00 which is the median of specific-gravity of the light specific-gravity-sorted fragments, and by putting the light specific-gravity sorted fragments in the separating liquid 30B.

Incidentally, even if the number of materials is three, the secondary wet specific-gravity sorter 15 may be used for further separation in the case where the materials are close to each other in the triboelectric series.

D. The heavy and light specific-gravity-sorted fragments separated by the primary wet specific-gravity sorter 14 may lower the separating accuracy in the specific-gravity sorting of the secondary wet specific-gravity sorter 15 since the fragments are contaminated by the separating liquid 30A which is saline water. Therefore, the fragments are sent to the washers 21A and 21B to have salt removed therefrom and then supplied to the drainers 22A and 22B, respectively. Moreover, the light/heavy specific-gravity-sorted fragments and light/light specific-gravity-sorted fragments are supplied to the drainers 22C and 22D without being cleaned in the washers 21C and 21D since the separating liquid 30B is water and thus the fragments are not contaminated.

E. The heavy specific-gravity-sorted fragments, light/heavy specific-gravity-sorted fragments, and light/light specific-gravity-sorted fragments are respectively sent to the first to third electrostatic separation devices 16A to 16C. Then, the specific-gravity-sorted fragments are heated and dried in the dry-and-supply hopper 50. Further, the specific-gravity-sorted fragments are injected into the electrification container 61 of the frictional electrification device 51, are stirred by the stirring blades 62 such that the specific-gravity-sorted fragments are rubbed against each other, the inner surface of the electrification container 61, and the surfaces of the stirring blades 62, and are frictionally electrified.

The waste plastic fragments are injected from the quantitative feeder 69 to the static electric field 57 generated between the rotary drum electrode 52 and the opposite electrode 53 via the top of the rotary drum electrode 52, and are separated into waste plastic fragments with positive polarity which are attracted by the rotary drum electrode 52 and waste plastic fragments with negative polarity which are attracted by the opposite electrode 53, according to differences in polarity and electrification amount between materials.

In other words, in the first electrostatic separation device 16A which sorts the heavy specific-gravity-sorted fragments (PTFE, PVC), PVC is charged with positive polarity and is attracted by the rotary drum electrode 52. Thus, PVC is contained in the second sorting tray 54B. In the meantime, PTFE is charged with negative polarity and is attracted by the opposite electrode 53. Thus, PTFE is contained in the first sorting tray 54A.

In the second electrostatic separation device 16B which separates the light/heavy specific-gravity-sorted fragments (ABS, PS), ABS is charged with positive polarity and is attracted by the rotary drum electrode 52. Thus, ABS is contained in the second sorting tray 54B. In the meantime, PS is charged with negative polarity and is attracted by the opposite electrode 53. Thus, PS is contained in the first sorting tray 54A.

In the third electrostatic separation device 16C which separates the light/light specific-gravity-sorted fragments (PP, PE), PE is charged with positive polarity and is attracted by the rotary drum electrode 52. Thus,
PE is contained in the second sorting tray 54B. In the meantime, PP is charged with negative polarity and is attracted by the opposite electrode 53. Thus, PP is contained in the first sorting tray 54A.

In the embodiment, the number of types of specific-gravity-sorted fragments separated by the wet specific-gravity sorter 14 or 15 is not one. However, in the case where the number of types of specific-gravity-sorted fragments is one, the fragments contaminated by the separating liquids 30A and 30B are cleaned by the washers, and then cleaning water is removed by the drainers.

In accordance with the embodiment, waste plastic fragments containing multiple materials can be sorted out and separated accurately according to the type of material through the following steps: repeating wet specific-gravity sorting with the primary wet specific-gravity sorter 14 and the secondary wet specific-gravity sorter 15 to separate waste plastic fragments into specific-gravity-sorted fragments containing three or less materials; and performing electrostatic separation on the specific-gravity-sorted fragments containing two or three materials with the first to third electrostatic separation devices 16A to 16C. Thus, waste plastic fragments containing multiple materials can be efficiently sorted out and separated according to the type of material, and waste plastic feedstock can be efficiently recycled.

The accuracy of wet specific-gravity sorting and electrostatic separation can be improved, since contaminants such as oils and mold release agents adhering to the surfaces of waste plastic fragments are effectively removed with the steam-cleaning device 13 spraying steam to the waste plastic fragments prior to wet specific-gravity sorting.

Further, in the primary wet specific-gravity sorter 14, the accuracy of separation by the separating liquids 30 can be improved since the supply cylinder 42 is opened so as to face the heavy specific-gravity fragment collecting portion 37 in the vicinity of the bottom of the separation tank 32 to extend the retention time and floating time of specific-gravity-sorted fragments in the separating liquids 30.

Furthermore, the sorting accuracy can be improved in the electrostatic sorting devices 56 of the first to third electrostatic separation devices 16A to 16C by keeping the relative humidity of the atmosphere for sorting in the boxes 55 at 60% or lower with the humidity adjusters 73.

Instead of the humidity adjuster 73, the sorting accuracy can be improved by providing, as other sorting atmosphere adjusters,: the heating lamps 81 and 83 and the heated air supply fan 82 as the box heater; and the sheathed heaters 84 and 86 and the infrared lamps 85 and 87 as the electrode heaters.

Incidentally, in the present embodiment, the first to third electrostatic separation devices 16A to 16C are configured to separate specific-gravity-sorted fragments containing two materials according to the type of material. As shown in FIG. 5B, the first to third sorting trays 54A to 54C may be disposed to separate specific-gravity-sorted fragments containing three materials according to the type of material.

## Claims

1. A method for sorting and separating waste plastic, when sorting and separating waste plastic containing multiple materials according to a type of material, the method comprising the steps of:
crushing waste plastic feedstock into waste plastic fragments each having a predetermined size;
putting the cleaned waste plastic fragments into a separating liquid having specific gravity which is a median of specific gravity of the materials contained in the waste plastic fragments, and repeating wet specific gravity sorting to separate the waste plastic fragments into floating light specific-gravity-sorted fragments and sinking heavy specific-gravity-sorted fragments until the light specific-gravity-sorted fragments and the heavy specific-gravity-sorted fragments each contain three or less materials; and
putting the frictionally electrified specific-gravity-sorted fragments containing two or three materials into an static electric field formed between a rotary drum electrode and an opposite electrode which are applied with high voltage, and altering falling directions of the specific-gravity-sorted fragments by using electrostatic power generated by polarity and electrification amount of the materials to perform electrostatic separation for separating the specific-gravity-sorted fragments according to the type of material.

2. A facility for sorting and separating waste plastic containing multiple materials according to a type of material, the facility comprising:
a crusher for crushing waste plastic material feedstock into waste plastic fragments each having a predetermined size;
a cleaning device disposed downstream of the crusher for cleaning the waste plastic fragments;
at least one wet specific-gravity sorter disposed downstream of the cleaning device for separating the waste plastic fragments into floating light specific-gravity-sorted fragments and sinking heavy specific-gravity-sorted fragments with a separating liquid having specific gravity which is a median of specific gravity of the materials contained in the waste plastic fragments until the light specific-gravity-sorted fragments and the heavy specific-gravity-sorted fragments each contain three or less materials; and
an electrostatic separation device which is disposed downstream of the wet specific-gravity sorter and includes an electrostatic sorting device for separating the light specific-gravity-sorted fragments and the heavy specific-gravity-sorted fragments according to the type of material, wherein
the electrostatic sorting device includes a frictional electrification device for frictionally electrifying the specific-gravity-sorted fragments, and a rotary drum electrode and an opposite electrode which are applied with high voltage and form a static electric field, the specific-gravity-sorted fragments frictionally electrified by the frictional electrification device are put into the static electric field, and electrostatic power generated by polarity and electrification amount of the materials of the specific-gravity-sorted fragments is used to alter falling directions of the specific-gravity-sorted fragments.

3. The facility for sorting and separating waste plastic according to claim 2, wherein the cleaning device comprises a steam-cleaning device for spraying steam to the waste plastic fragments to remove contaminants from surfaces of the waste plastic fragments.

4. The facility for sorting and separating waste plastic according to any one of claims 2 and 3, wherein the wet specific-gravity sorter comprises:
a separation tank which contains a separating liquid and has a heavy specific-gravity fragment collecting portion formed on a bottom of the separation tank for collecting the sinking heavy specific-gravity-sorted fragments;
a material supplier having a supply port opened so as to face the heavy specific-gravity fragment collecting portion in a vicinity of the bottom of the separation tank;
a heavy specific-gravity fragment discharger having an inlet opened so as to face the heavy specific-gravity fragment collecting portion in the separation tank for discharging the heavy specific-gravity-sorted fragments; and
a light specific-gravity fragment discharger having an inlet opened so as to face a surface of the separating liquid in the separation tank for discharging the light specific-gravity-sorted fragments, and
the material supplier has a rotary axis with a plurality of protruding pieces rotatably disposed at an axial center position of a supply cylinder, the protruding pieces being capable of stirring the specific-gravity-sorted fragments at a high speed and supplying the specific-gravity-sorted fragments from the supply port.
